# EUROPÄISCHE PATENTANMELDUNG

(11) **EP 4 706 371 A1**
(43) Veröffentlichungstag der Anmeldung: **11.03.2026**
(21) Anmeldenummer: 25201032.7
(22) Anmeldetag: 09.09.2025
(51) Int. Cl.: A01D 84/00

(54) **LANDWIRTSCHAFTLICHE ERNTEMASCHINE UND VERFAHREN ZUM BETREIBEN DERSELBEN**

(30) Priorität: 10.09.2024 DE 102024126013
(71) Anmelder: CLAAS Saulgau GmbH, 88348 Bad Saulgau (DE)
(72) Erfinder: Birkhofer, Stefan, 78333 Stockach (DE); Sauter, Stefan, 88529 Zwiefalten (DE)

(57) **Zusammenfassung**

Landwirtschaftliche Erntemaschine (10), mit einen Rahmen (11), an welchem ein Fahrwerk (15) angreift, mit Auslegern (17), wobei zu beiden Seiten des Rahmens (11) jeweils mindestens ein Ausleger (17) am Rahmen derart angreift, dass zur Überführung der Erntemaschine (10) zwischen einer Arbeitsstellung und einer Transportstellung der jeweilige Ausleger (17) relativ zum Rahmen (11) verlagerbar ist, mit Arbeitseinheiten (18), wobei an jedem der Ausleger (17) jeweils mindestens eine Arbeitseinheit (18) angreift, die zusammen mit dem jeweiligen Ausleger (17) verlagerbar sind, mit Schwenkzylindern (23) und Aushubzylindern (24), wobei zu jeder Seite des Rahmens (11) jeweils ein Schwenkzylinder (23) und jeweils ein Aushubzylinder (24) angeordnet sind, die den mindestens einen an der jeweiligen Seite des Rahmens (11) angeordneten Ausleger (17) zusammen mit der mindestens einen Arbeitseinheit (18) über eine jeweilige Überführungsbewegung zwischen der Arbeitsstellung und der Transportstellung verlagern, mit einem Steuergerät und/oder wenigstens einer Einrichtung zur hydraulischen Mengenaufteilung, die dazu eingerichtet sind, den an der jeweiligen Seite des Rahmens (11) angeordneten Schwenkzylinder (23) und Aushubzylinder (24) zur Überführung der Erntemaschine (10) zwischen der Arbeitsstellung und der Transportstellung zumindest über einen Teil der Überführungsbewegung des mindestens einen an der jeweiligen Seite des Rahmens (11) angeordneten Auslegers (17) gleichzeitig hydraulisch anzusteuern und gleichzeitig für die jeweilige Überführungsbewegung zu nutzen. Fig. 1

## Beschreibung

Die Erfindung betrifft eine landwirtschaftliche Erntemaschine. Ferner betrifft die Erfindung ein Verfahren zum Betreiben einer landwirtschaftlichen Erntemaschine.

Aus der Praxis sind landwirtschaftliche Erntemaschinen bekannt, die an ein Zugfahrzeug angekoppelt werden können, um mithilfe des Zugfahrzeugs ziehend, also durch das Zugfahrzeug gezogen, fortbewegt werden können. Bei solchen ziehend durch ein Zugfahrzeug fortbewegten landwirtschaftlichen Erntemaschinen handelt es sich insbesondere um Futtererntemaschinen, wie zum Beispiel Schwader oder Wender.

EP 2 979 529 B1 offenbart eine als Merger ausgebildete landwirtschaftliche Erntemaschine. Merger werden auch als Pickup-Band-Schwader bezeichnet. Ein Merger verfügt über einen Rahmen oder Gestell, an welchem ein Fahrwerk und eine Deichsel angreifen. Über die Deichsel und einen mit der Deichsel zusammenwirkenden Ankoppelbock ist die landwirtschaftliche Erntemaschine an ein Zugfahrzeug ankoppelbar, um vom Zugfahrzeug ziehend fortbewegt zu werden. Über das Fahrwerk stützt sich die Erntemaschine auf einem Untergrund ab. Am Rahmen oder Gestell greifen zu beiden Seiten Ausleger an, wobei die Ausleger Arbeitseinheiten aufnehmen. Bei einem Merger weisen die Arbeitseinheiten Pickups zur Aufnahme von Erntegut vom Boden und Bandfördersegmente zur Förderung des Ernteguts auf.

Soll die aus der EP 2 979 529 B1 bekannte Erntemaschine zwischen einer Arbeitsstellung und einer Transportstellung überführt werden, so werden die Arbeitseinheiten zunächst aus ihrer Arbeitsstellung heraus um eine horizontale Achse nach oben geklappt, wobei anschließend die nach oben geklappten Arbeitseinheiten um eine vertikale Achse nach vorne klappbar sind, nämlich zusammen mit den die Arbeitseinheiten aufnehmenden Auslegern. Gemäß EP 2 979 529 B1 ist demnach erforderlich, zunächst die Arbeitsorgane um eine horizontale, sich in Querrichtung erstreckende Achse nach oben und anschließend zusammen mit den Auslegern um eine vertikale Hochachse nach vorne zu klappen.

DE 10 2019 118 738 A1 offenbart eine weitere als Merger ausgebildete landwirtschaftliche Erntemaschine. Soll diese Erntemaschine von der Arbeitsstellung in die Transportstellung überführt werden, so werden zunächst die Arbeitseinheiten zusammen mit den die Arbeitseinheiten aufnehmenden Auslegern um eine sich in vertikaler Hochrichtung erstreckende Achse relativ zum Rahmen bzw. Gestell in eine Zwischenstellung verlagert, um anschließend aus dieser Zwischenstellung heraus um eine sich in horizontaler Längsrichtung erstreckende Achse relativ zum Rahmen oder Gestell in die Transportstellung verlagert zu werden. Auch hier erfolgen demnach zeitlich nacheinander Verlagerungen der Arbeitseinheiten um unterschiedliche Achsen.

DE 10 2020 106 804 A1 offenbart eine als Merger ausgebildete Erntemaschine, bei welcher der Rahmen bzw. das Gestell zwei relativ zueinander verlagerbare Abschnitte aufweist, um den Abstand der Arbeitseinheiten zum Untergrund zu verändern.

Es besteht Bedarf an einer landwirtschaftlichen Erntemaschine, die vorteilhaft zwischen der Transportstellung und der Arbeitsstellung überführt werden kann. Ferner besteht Bedarf an einem Verfahren zum Betreiben einer solchen landwirtschaftlichen Erntemaschine, um dieselbe zwischen der Transportstellung und der Arbeitsstellung zu überführen.

Die Aufgabe der Erfindung ist es, eine entsprechende landwirtschaftliche Erntemaschine und ein Verfahren zum Betreiben derselben zu schaffen.

Diese Aufgabe wird durch eine landwirtschaftliche Erntemaschine nach Anspruch 1 und durch ein Verfahren nach Anspruch 12 gelöst.

Die erfindungsgemäße landwirtschaftliche Erntemaschine weist einen Rahmen oder ein Gestell auf, an welchem ein Fahrwerk angreift.

Die erfindungsgemäße landwirtschaftliche Erntemaschine weist ferner Ausleger auf, wobei zu beiden Seiten des Rahmens oder Gestells jeweils mindestens ein Ausleger am Rahmen oder Gestell derart angreift, dass zur Überführung der Erntemaschine zwischen einer Arbeitsstellung und einer Transportstellung der jeweilige Ausleger relativ zum Rahmen oder Gestell verlagerbar ist.

Die erfindungsgemäße landwirtschaftliche Erntemaschine weist ferner Arbeitseinheiten auf, wobei an jedem der Ausleger jeweils mindestens eine Arbeitseinheit angreift, die zusammen mit dem jeweiligen Ausleger verlagerbar sind.

Die erfindungsgemäße landwirtschaftliche Erntemaschine weist ferner Schwenkzylinder und Aushubzylinder auf, wobei zu jeder Seite des Rahmens oder Gestells jeweils ein Schwenkzylinder und jeweils ein Aushubzylinder angeordnet sind, die den mindestens einen an der jeweiligen Seite des Rahmens oder Gestells angeordneten Ausleger zusammen mit der mindestens einen Arbeitseinheit über eine jeweilige Überführungsbewegung zwischen der Arbeitsstellung und der Transportstellung verlagern.

Die erfindungsgemäße landwirtschaftliche Erntemaschine weist ferner ein Steuergerät auf, das eingerichtet ist, den an der jeweiligen Seite des Rahmens oder Gestells angeordneten Schwenkzylinder und Aushubzylinder zur Überführung der Erntemaschine zwischen der Arbeitsstellung und der Transportstellung zumindest über einen Teil der Überführungsbewegung des mindestens einen an der jeweiligen Seite des Rahmens oder Gestells angeordneten Auslegers gleichzeitig hydraulisch anzusteuern und gleichzeitig für die jeweilige Überführungsbewegung zu nutzen.

Bei der erfindungsgemäßen Erntemaschine sind die Ausleger zusammen mit den an den Auslegern aufgenommenen Arbeitseinheiten gleichzeitig um unterschiedliche Achsen verlagerbar, um die Erntemaschine zwischen der Arbeitsstellung und der Transportstellung zu überführen. Hierzu werden Schwenkzylinder und Aushubzylinder gleichzeitig hydraulisch angesteuert und für die jeweilige Überführungsbewegung zwischen der Arbeitsstellung und der Transportstellung der Erntemaschine genutzt. Während dieser Überführungsbewegung führen demnach die Ausleger mit den an den Auslegern aufgenommenen Arbeitseinheiten eine dreidimensionale Bewegung mit einer gleichzeitigen Schwenk- bzw. Kippbewegung um mehrere Achsen aus.

Die zu beiden Seiten des Rahmens oder Gestells angeordneten Ausleger erstrecken sich in der Arbeitsstellung der Erntemaschine in Querrichtung derselben und in der Transportstellung der Erntemaschine in Längsrichtung derselben, wobei das Steuergerät vorzugsweise eingerichtet ist, die zu beiden Seiten des Rahmens oder Gestells angeordneten Schwenkzylinder und Aushubzylinder zur Überführung der Erntemaschine zwischen der Arbeitsstellung und der Transportstellung zumindest über denjenigen Teil der Überführungsbewegung, in welchem die Ausleger zwischen der Erstreckung in Querrichtung der Erntemaschine und der Erstreckung in Längsrichtung überführt werden, gleichzeitig hydraulisch anzusteuern und gleichzeitig für die jeweilige Überführungsbewegung zu nutzen. Dies ist für die Überführung der Erntemaschine zwischen der Arbeitsstellung und der Transportstellung besonders bevorzugt.

Vorzugsweise greift der jeweilige Schwenkzylinder einerseits am Rahmen oder Gestell und anderseits am jeweiligen Ausleger gelenkig an, wobei sich in der Arbeitsstellung der Erntemaschine eine Klappachse zwischen dem jeweiligen Schwenkzylinder und dem jeweiligen Ausleger in etwa vertikaler Richtung erstreckt. Der jeweilige Aushubzylinder greift vorzugsweise einerseits am Rahmen oder Gestell und anderseits am jeweiligen Ausleger gelenkig an, wobei sich in der Arbeitsstellung der Erntemaschine eine Klappachse zwischen dem jeweiligen Aushubzylinder und dem jeweiligen Ausleger in horizontaler Richtung erstreckt. Auch dies ist für die Überführung der Erntemaschine zwischen der Arbeitsstellung und der Transportstellung besonders bevorzugt.

Vorzugsweise greift zu beiden Seiten des Rahmens oder Gestells am Rahmen oder Gestell jeweils mindestens eine Aufnahme an, die zur formschlüssigen Anordnung eines zur jeweiligen Seite des Rahmens oder Gestells angeordneten Auslegers in der Transportstellung der Erntemaschine ausgebildet ist, wobei das Steuergerät eingerichtet ist, dass dann, wenn sich die zu beiden Seiten des Rahmens oder Gestells angeordneten Ausleger in Längsrichtung der Erntemaschine erstrecken, ausschließlich den jeweiligen Schwenkzylinder hydraulisch anzusteuern und für die jeweilige Überführungsbewegung zu nutzen, um bei der Überführung der Erntemaschine von Arbeitsstellung in die Transportstellung den jeweiligen Ausleger in die jeweilige Aufnahme hinein zu bewegen und bei der Überführung der Erntemaschine von der Transportstellung in die Arbeitsstellung den jeweiligen Ausleger aus der jeweilige Aufnahmen heraus zu bewegen. Hierdurch nehmen die Ausleger und damit auch die an den Auslegern aufgenommenen Arbeitseinheiten in der Transportstellung eine definierte Position ein und sind in der Transportstellung formschlüssig gehalten.

Vorzugsweise weist der Rahmen oder das Gestell einen ersten Abschnitt, an welchem das Fahrwerk angreift, und einen zweiten Abschnitt, an welchem die Deichsel angreift, auf, wobei diesen beiden Abschnitte mit Hilfe eines Knickzylinders um eine sich in Querrichtung erstreckende Achse relativ zueinander verlagerbar sind, um den Abstand der Arbeitseinheiten von einem Untergrund zu verändern. Insbesondere ist das Steuergerät eingerichtet, den Knickzylinder zumindest über einen Teil der Überführungsbewegung der Ausleger gleichzeitig mit den Schwenkzylindern und Aushubzylindern hydraulisch anzusteuern und gleichzeitig für die jeweilige Überführungsbewegung zu nutzen. Hiermit kann die Überführung der landwirtschaftlichen Erntemaschine zwischen der Arbeitsstellung und der Transportstellung weiter verbessert werden.

Vorzugsweise ist die landwirtschaftliche Erntemaschine eine Futtererntemaschine, insbesondere ein Merger oder Pickup-Band-Schwader, wobei an jedem der Ausleger als Arbeitseinheit eine Pickup und ein Bandfördersegment angreift. Die Erfindung kommt vorzugsweise bei einem Merger zum Einsatz.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, anhand der Zeichnung näher erläutert. Dabei zeigt:
- Fig. 1: eine perspektivische Ansicht von hinten auf eine erfindungsgemäße landwirtschaftliche Erntemaschine in Arbeitsstellung derselben;
- Fig. 2: die landwirtschaftliche Erntemaschine der Fig. 1 in Seitenansicht;
- Fig. 3: eine perspektivische Ansicht von hinten auf die erfindungsgemäße landwirtschaftliche Erntemaschine in Transportstellung derselben;
- Fig. 4: die landwirtschaftliche Erntemaschine der Fig. 3 in Seitenansicht;
- Fig. 5: eine perspektivische Ansicht von hinten auf die erfindungsgemäße landwirtschaftliche Erntemaschine bei der Überführung derselben zwischen der Arbeitsstellung und der Transportstellung derselben;
- Fig. 6: die landwirtschaftliche Erntemaschine der Fig. 5 in Seitenansicht;
- Fig. 7: eine perspektivische Ansicht von hinten auf die erfindungsgemäße landwirtschaftliche Erntemaschine in Vorgewendestellung derselben;
- Fig. 8: die landwirtschaftliche Erntemaschine der Fig. 7 in Seitenansicht.

Die Erfindung betrifft eine landwirtschaftliche Erntemaschine 10.

Bei der landwirtschaftlichen Erntemaschine 10 handelt es sich insbesondere um eine Futtererntemaschine, die zur ziehenden Fortbewegung durch ein Zugfahrzeug an ein Zugfahrzeug angekoppelt werden kann.

Bei der in den Figuren gezeigten Futtererntemaschine handelt sich um einen Merger, der auch als Pickup-Band-Schwader bezeichnet wird.

Die landwirtschaftliche Erntemaschine 10 weist ein Gestell bzw. einen Rahmen 11 auf, wobei das Gestell bzw. der Rahmen 11 einen Längsträger 12 aufweist, der sich in Längsrichtung X der landwirtschaftlichen Erntemaschine erstreckt.

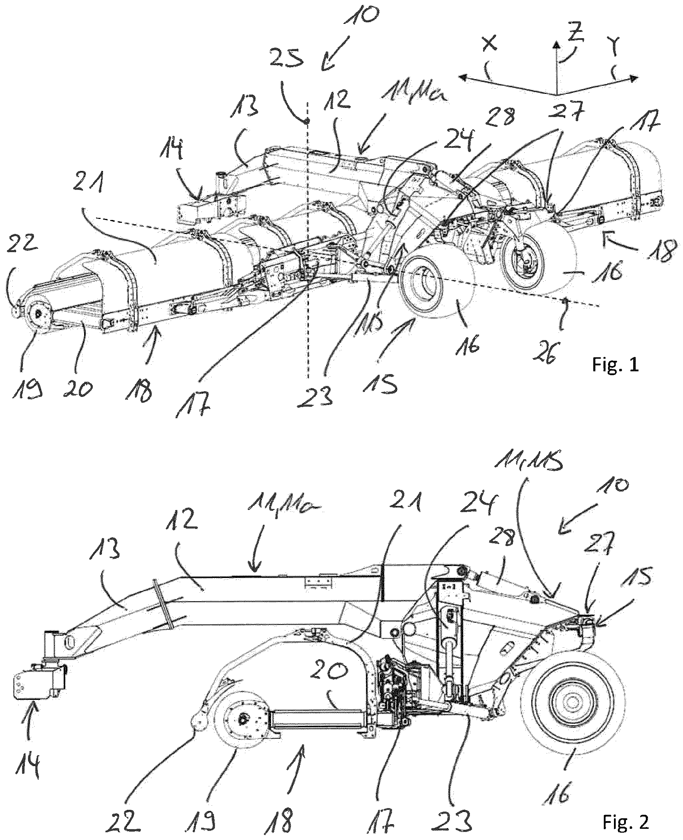

An dem Gestell bzw. Rahmen 11, nämlich an dem Längsträger 12 greift gemäß Fig. 1 eine Deichsel 13 an, die der Ankopplung der Erntemaschine 10 über einen Ankoppelbock 14 an ein Zugfahrzeug dient. Dann, wenn die Erntemaschine 10 an ein Zugfahrzeug angekoppelt ist, ist eine Relativbewegung zwischen der Deichsel 13 und dem Ankoppelbock 14 um eine sich in vertikaler Hochrichtung Z erstreckende Achse möglich. Ferner ist eine Relativbewegung zwischen den Ankoppelbock 14 und dem Zugfahrzeug um eine sich in horizontaler Querrichtung Y erstreckende Achse möglich.

An dem Rahmen oder Gestell 11 greift ein Fahrwerk 15 mit Rädern 16 an. Beim ziehenden Fortbewegen der landwirtschaftlichen Erntemaschine 10 mithilfe eines Zugfahrzeugs stützen sich die Räder 16 des Fahrwerks 15 auf einem Untergrund ab.

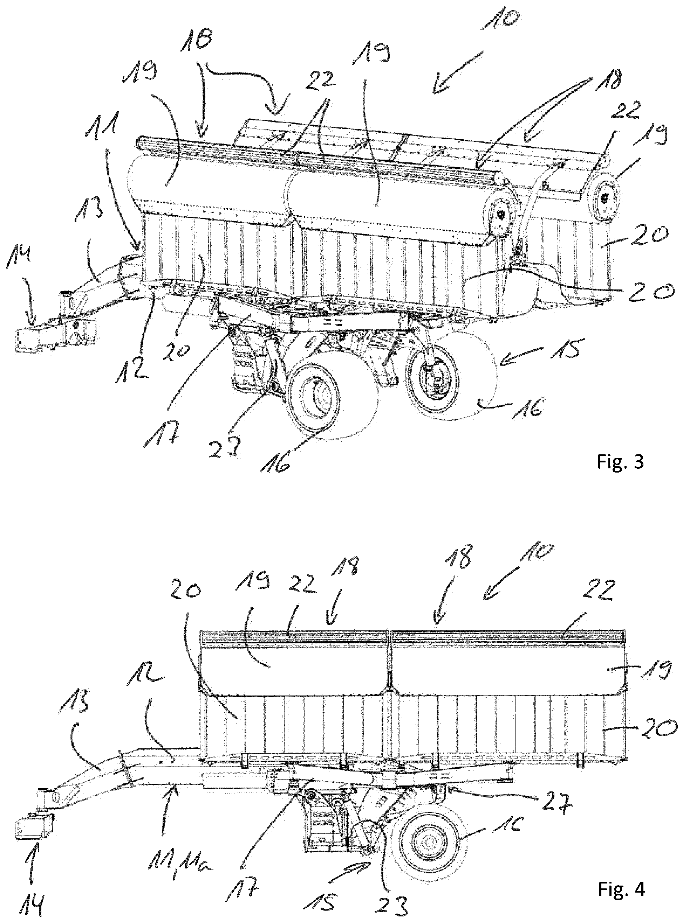

Die landwirtschaftliche Erntemaschine 10 verfügt ferner über Ausleger 17. Zu beiden Seiten des Rahmens oder Gestells 11, nämlich zu beiden Seiten des Längsträgers 12, greift jeweils mindestens ein Ausleger 17 am Rahmen oder Gestell 11 an, nämlich derart, dass zur Überführung der Erntemaschine 10 zwischen einer Arbeitsstellung (Fig. 1, 2) und einer Transportstellung (Fig. 3, 4) der jeweilige Ausleger 17 relativ zum Rahmen oder Gestell 11 verlagerbar ist.

Die landwirtschaftliche Erntemaschine 10 verfügt ferner über Arbeitseinheiten 18. An jedem Ausleger 17 greift jeweils mindestens eine Arbeitseinheit 18 an, die zusammen mit dem jeweiligen Ausleger 17 verlagerbar ist, nämlich bei der Überführung der Erntemaschine 10 zwischen der Arbeitsstellung und der Transportstellung.

Im gezeigten Ausführungsbeispiel, in welchem die landwirtschaftliche Erntemaschine 10 als Merger ausgebildet ist, weist jede Arbeitseinheit 18 eine Pickup 19 und ein Bandfördersegment 20 auf.

Ferner sind im Bereich der Arbeitseinheiten 18 an einer in Zugrichtung bzw. Längsrichtung X hinten liegenden Seite Abdeckungen 21 für die Arbeitseinheiten 18 gezeigt, wobei an den Abdeckungen 21 Rollenniederhalter 22 für Erntegut angreifen.

Im gezeigten Ausführungsbeispiel sind zu beiden Seiten des Rahmens oder Gestells 11, nämlich zu beiden Seiten des Längsträgers 12, an jeweiligen Auslegern 17 jeweils zwei Arbeitseinheiten 18 angeordnet.

Die landwirtschaftliche Erntemaschine 10 verfügt weiterhin über Schwenkzylinder 23 und Aushubzylinder 24. Zu jeder Seite des Rahmens oder Gestells 11, nämlich zu jeder Seite des Längsträgers 12, ist jeweils ein Schwenkzylinder 23 und jeweils ein Aushubzylinder 24 angeordnet, die den mindestens einen an der jeweiligen Seite des Rahmens oder Gestells 11 angeordneten Ausleger 17 zusammen mit der mindestens einen am jeweiligen Ausleger 17 angreifenden Arbeitseinheit 18 über eine jeweilige Überführungsbewegung zwischen der Arbeitsstellung und der Transportstellung der Erntemaschine 10 verlagern.

Der jeweilige Schwenkzylinder 23 greift einerseits am Rahmen oder Gestell 11 und andererseits am jeweiligen Ausleger 17 jeweils gelenkig an, wobei sich in der Arbeitsstellung der Erntemaschine 10 (siehe Fig. 1) eine Klappachse 25 zwischen dem jeweiligen Schwenkzylinder 23 und dem jeweiligen Ausleger 17 in Vertikalrichtung Z erstreckt.

Der jeweilige Aushubzylinder 24 greift ebenfalls einerseits am Rahmen oder Gestell 11 und andererseits am jeweiligen Ausleger 17 jeweils gelenkig an, wobei sich in der Arbeitsstellung der Erntemaschine 10 (siehe Fig. 1) eine Klappachse 26 zwischen dem jeweiligen Aushubzylinder 24 und dem jeweiligen Ausleger 17 in horizontaler Längsrichtung X der Erntemaschine 10 erstreckt.

Die landwirtschaftliche Erntemaschine 10 verfügt weiterhin über ein nicht gezeigtes Steuergerät, das eingerichtet ist, den an der jeweiligen Seite des Rahmens oder Gestells 11 der landwirtschaftlichen Erntemaschine 10 angeordneten Schwenkzylinder 23 und den Aushubzylinder 24 zur Überführung der Erntemaschine 10 zwischen der Arbeitsstellung und der Transportstellung zumindest über einen Teil der Überführungsbewegung des mindestens einen an der jeweiligen Seite des Rahmens oder Gestells 11 angeordneten Auslegers 17 gleichzeitig hydraulisch anzusteuern und gleichzeitig für die jeweilige Überführungsbewegung zu nutzen. Zumindest über einen Teil der Überführungsbewegung der landwirtschaftlichen Erntemaschine 10 zwischen der Arbeitsstellung und der Transportstellung werden also die Ausleger 17 gleichzeitig um die Klappachse 25 und um die Klappachse 26 verlagert.

Das Steuergerät ist dabei eingerichtet, die zu beiden Seiten des Rahmens oder Gestells 11 angeordneten Schwenkzylinder 23 und Aushubzylinder 24 zur Überführung der Erntemaschine 10 zwischen der Arbeitsstellung und der Transportstellung zumindest über den jeweiligen Teil der Überführungsbewegung der zu beiden Seiten des Rahmens oder Gestells 11 angeordneten Ausleger 17 gleichzeitig hydraulisch anzusteuern und gleichzeitig für die jeweilige Überführungsbewegung zu nutzen, sodass demnach die zu beiden Seiten des Rahmens oder Gestells 11 angeordneten Ausleger 17 zusammen mit den daran angreifenden Arbeitseinheiten 18 zeitgleich zwischen der Arbeitsstellung und der Transportstellung überführt werden können.

Wie Fig. 1 entnommen werden kann, erstrecken sich die zu beiden Seiten des Rahmens oder Gestells 11 angeordneten Ausleger 17 zusammen mit den an denselben angreifenden Arbeitseinheiten 18 in der Arbeitsstellung der Erntemaschine in Querrichtung Y der Erntemaschine 10. In der Transportstellung der Erntemaschine 10 erstrecken sich die zu beiden Seiten des Rahmens oder Gestells angeordneten Ausleger 17 mit den daran angeordneten Arbeitseinheiten 18 in Längsrichtung X der Erntemaschine 10. Dies ist in Fig. 3, 4 gezeigt.

Das Steuergerät ist eingerichtet, die zu beiden Seiten des Rahmens oder Gestells 11 angeordneten Schwenkzylinder 23 und Aushubzylinder 24 zur Überführung der Erntemaschine zwischen der Arbeitsstellung und der Transportstellung über zumindest denjenigen Teil der Überführungsbewegung gleichzeitig hydraulisch anzusteuern und gleichzeitig für die Überführungsbewegung zu nutzen, in welchem die Ausleger 17 zwischen der in Fig. 1 gezeigten Erstreckung derselben in Querrichtung Y und der in Fig. 3 gezeigten Erstreckung derselben in Längsrichtung X überführt werden.

Zu beiden Seiten des Rahmens oder Gestells 11 ist am Rahmen oder Gestell 11 jeweils mindestens eine Aufnahme 27 ausgebildet, die zur formschlüssigen Anordnung bzw. Aufnahme eines zur jeweiligen Seite des Rahmens oder Gestells 11 angeordneten Auslegers 17 in der Transportstellung der Erntemaschine 10 ausgebildet ist.

Das Steuergerät ist eingerichtet, dass dann, wenn sich die zu beiden Seiten des Rahmens oder Gestells 11 angeordneten Ausleger 17 zusammen mit den an denselben angreifenden Arbeitseinheiten 18 in Längsrichtung X der Erntemaschine 10 erstrecken, ausschließlich den jeweiligen Schwenkzylinder 23 hydraulisch anzusteuern und für die jeweilige Überführungsbewegung des jeweiligen Auslegers 17 zu nutzen, um bei der Überführung der Erntemaschine 10 ausgehend von der Arbeitsstellung hinein in die Transportstellung den jeweiligen Ausleger 17 in die jeweilige Aufnahme 27 hineinzubewegen und bei der Überführung der Erntemaschine 10 ausgehend von der Transportstellung in Richtung auf die Arbeitsstellung den jeweiligen Ausleger 17 aus der jeweiligen Aufnahme 27 herauszubewegen.

Wie oben bereits ausgeführt, werden für die Überführungsbewegung der Ausleger 17 mit den an den Auslegern 17 angreifenden Arbeitseinheiten 18 zwischen der Orientierung derselben in Querrichtung Y und der Orientierung derselben in Längsrichtung X die Schwenkzylinder 23 und die Aushubzylinder 24 gleichzeitig hydraulisch angesteuert und gleichzeitig für die Überführungsbewegung genutzt, sodass demnach eine Klappbewegung gleichzeitig um die Klappachsen 25, 26 erfolgt. Hierdurch wird eine dreidimensionale Überführungsbewegung für die Ausleger 17 und Arbeitseinheiten 18 der Erntemaschine 10 zwischen der Arbeitsstellung und der Transportstellung bereitgestellt, wobei die Schwenkzylinder 23 und Aushubzylinder 24 entweder über ein festes Verhältnis, zum Beispiel mit linearer Abhängigkeit, hydraulisch angesteuert werden oder mit einem variablen Verhältnis elektrohydraulisch angesteuert werden, ggf. gekoppelt mit einer Überwachung der jeweiligen Klappwinkel um die Klappachsen 25, 26 mithilfe von Sensoren.

Im gezeigten Ausführungsbeispiel der landwirtschaftlichen Erntemaschine weist der Rahmen oder das Gestell 11 einen ersten Abschnitt 11b, an welchem das Fahrwerk 15 angreift, und einen zweiten Abschnitt 11a, an welchem die Deichsel 13 angreift, auf, wobei diese beiden Abschnitte 11a, 11b mithilfe eines Knickzylinders 28, der mit gegenüberliegenden Enden an beiden Abschnitten 11a, 11b jeweils gelenkig angreift, um eine sich in Querrichtung Y der Erntemaschine 10 erstreckende Achse relativ zueinander verlagerbar sind, um so den Abstand der Arbeitseinheiten 18 von einem Untergrund zu verändern.

Das Steuergerät der Erntemaschine 10 kann dabei eingerichtet sein, den Knickzylinder 28 zumindest über einen Teil der Überführungsbewegung des jeweiligen Auslegers 17 gleichzeitig mit dem jeweiligen Schwenkzylinder 23 und dem jeweiligen Aushubzylinder 24 hydraulisch anzusteuern und gleichzeitig für die jeweilige Überführungsbewegung zu nutzen.

Der Knickzylinder 28 kann vorteilhaft dazu genutzt werden, die Ausleger 17 sanft auf dem Rahmen oder Gestell 11 abzulegen und durch das Zurückschwenken des Knicks - also Einfahren des Knickzylinders 28 - kann eine Verriegelung der Ausleger 17 am Rahmen oder Gestell 11 aktiviert werden, wodurch ein sicherer Straßentransport der Erntemaschine 10 möglich ist.

Ferner kann vorgesehen sein, dass dann, wenn die Erntemaschine 10 ausgehend von der Arbeitsstellung in Richtung auf die Transportstellung überführt wird, über den Knickzylinder 28 zunächst der Abstand der sich in Arbeitsstellung befindlichen Arbeitseinheiten 18 vom Untergrund vergrößert wird, um erst nachfolgend durch die gleichzeitige hydraulische Ansteuerung der Schwenkzylinder 23 und Aushubzylinder 24 die Überführungsbewegung für die Ausleger 17 und die an den Auslegern 17 befestigten Arbeitseinheiten 18 in Richtung auf die Transportstellung durchzuführen. Dies ist auch bei der umgekehrten Überführung der Erntemaschine 10, ausgehend von der Transportstellung in die Arbeitsstellung möglich. So kann verhindert werden, dass bei der durch die gleichzeitige hydraulische Ansteuerung der Schwenkzylinder 23 und Aushubzylinder 24 bewirkten Überführungsbewegung der Ausleger 17 und Arbeitseinheiten 18 die Arbeitseinheiten 18 mit dem Untergrund kollidieren.

Die Erfindung erlaubt eine besonders vorteilhafte Überführung einer landwirtschaftlichen Erntemaschine 10 zwischen der Arbeitsstellung und der Transportstellung derselben selbst bei großen Arbeitsbreiten der Erntemaschine 10 von mehr als 10 Metern. Durch die gleichzeitige Verlagerung der Ausleger 17 mit den an den Auslegern 17 angreifenden Arbeitseinheiten 18 um die Klappachsen 25, 26 kann die benötigte Zeit zur Überführung der Erntemaschine zwischen der Arbeitsstellung und der Transportstellung verkürzt werden, ferner wird stets eine optimale Lage des Schwerpunkts während der Verlagerungsbewegung zur verbesserten Standsicherheit der Erntemaschine 10 gewährleistet.

Wie am besten Fig. 1 und 2 entnommen werden kann, verlaufen die Schwenkzylinder 23 in der Arbeitsstellung im Wesentlichen horizontal, und zwar in Zugrichtung X der Erntemaschine 10 gesehen leicht ansteigend.

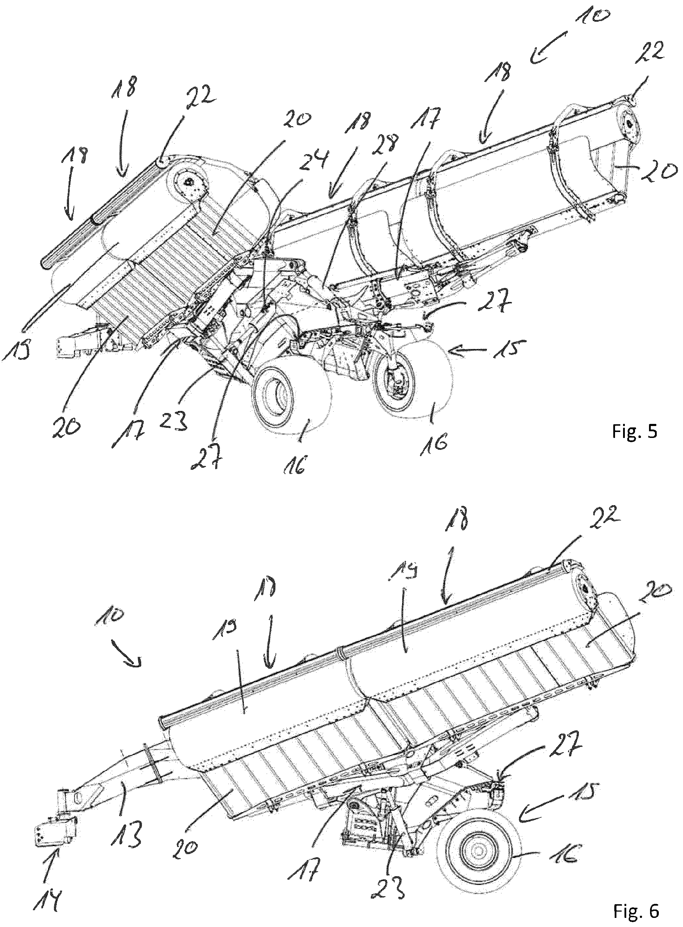

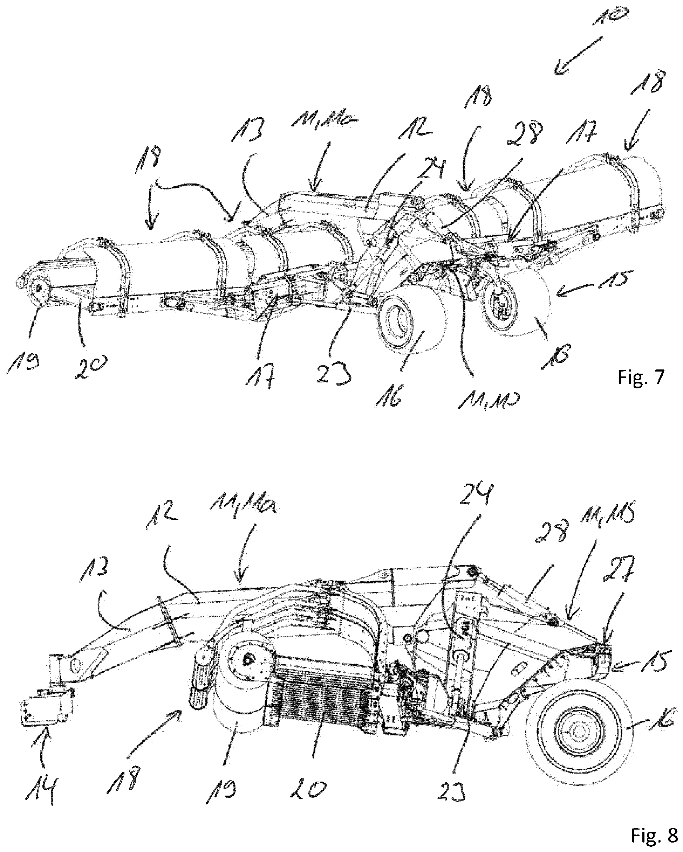

Während Fig. 1 und 2 die Erntemaschine 10 in der Arbeitsstellung, Fig. 3 und 4 die Erntemaschine 10 in der Transportstellung und Fig. 7 und 8 die Erntemaschine 10 in der Vorgewendestellung zeigen, zeigen Fig. 5 und 6 die Erntemaschine 10 bei der Überführung derselben zwischen der Arbeitsstellung der Fig. 1 und 2 und der Transportstellung der Fig. 3 und 4 während die Schwenkzylinder 23 und Aushubzylinder 24 gleichzeitig zur Überführung der Ausleger 17 und der an den Auslegern 17 angreifenden Arbeitseinheiten 18 zwischen der Arbeitsstellung und der Transportstellung genutzt werden.

Die Erfindung betrifft weiterhin ein Verfahren zum Betreiben der erfindungsgemäßen landwirtschaftlichen Erntemaschine 10. Beim erfindungsgemäßen Verfahren werden die bei der Überführung der Erntemaschine 10 zwischen der Arbeitsstellung und der Transportstellung, die zu beiden Seiten des Rahmens oder Gestells 11 angeordneten Schwenkzylinder 23 und Aushubzylinder 24 zumindest über einen Teil der Überführungsbewegung der am Rahmen oder Gestell 11 angreifenden Ausleger 17 gleichzeitig hydraulisch angesteuert und gleichzeitig für die jeweiligen Überführungsbewegung genutzt. Demnach erfolgt zumindest über einen Teil der Überführungsbewegung eine gleichzeitige Klappbewegung gleichzeitig um die jeweiligen Klappachsen 25, 26 der Schwenkzylinder 23 und der Aushubzylinder 24.

Bei der Überführung der Erntemaschine 10 ausgehend von der Arbeitsstellung in die Transportstellung werden zunächst die an den beiden Seiten des Rahmens oder Gestells 11 angeordneten Schwenkzylinder 23 und Aushubzylinder 24 gleichzeitig hydraulisch angesteuert und für die jeweilige Überführungsbewegung genutzt, bis sich die zu beiden Seiten des Rahmens oder Gestells angeordneten Ausleger 17 in Längsrichtung X der Erntemaschine erstrecken. Gegebenenfalls kann vorab über den Knickzylinder 18 der Abstand der Ausleger 17 sowie der an den Ausleger 17 angreifenden Arbeitseinheiten 18 vom Untergrund vergrößert werden. Nachdem die Ausleger 17 der Erntemaschine 10 in eine Stellung überführt wurden, in welcher sich die Ausleger 17 in Längsrichtung der Erntemaschine 10 erstrecken, werden nachfolgend ausschließlich die Schwenkzylinder 23 für die weitere Überführungsbewegung genutzt, um die Ausleger 17 in die zu beiden Seiten des Rahmens oder Gestells 11 angeordneten Aufnahmen 27 hineinzubewegen. Gegebenenfalls kann gleichzeitig oder etwas zeitlich versetzt hierzu der Knickzylinder 28 angesteuert werden.

Bei der Überführung der Erntemaschine 10 ausgehend von der Transportstellung in die Arbeitsstellung werden zunächst ausschließlich die Schwenkzylinder 23 für die jeweilige Überführungsbewegung genutzt, um die Ausleger 17 aus den zu beiden Seiten des Rahmens oder Gestells 11 angeordneten Aufnahmen 27 herauszubewegen, wobei hierbei zunächst die Ausrichtung der Ausleger 17, die sich in Längsrichtung erstrecken, unverändert bleibt. Nachfolgend werden die an beiden Seiten des Rahmens oder Gestells 11 angeordneten Schwenkzylinder 23 und Aushubzylinder 24 gleichzeitig hydraulisch angesteuert und für die jeweilige Überführungsbewegung genutzt, um die Ausleger 17 gleichzeitig um die Klappachsen 25, 26 zu verschwenken, und zwar bis sich zu beiden Seiten des Rahmens oder Gestells 11 die Ausleger 17 mit den daran angreifenden Arbeitseinheiten 18 in Querrichtung der Erntemaschine 10 erstrecken. Hierbei kann auch gleichzeitig der Knickzylinder 28 angesteuert werden. Dann, wenn sich die Ausleger 17 mit den Arbeitseinheiten 18 in Querrichtung der Erntemaschine erstrecken, werden nachfolgend über den Knickzylinder 28 die Arbeitseinheiten 18 abgesenkt, um deren Abstand zum Untergrund einzustellen.

Alternativ oder zusätzlich zur Ansteuerung der Schwenkzylinder 23 und Aushubzylinder 24 durch ein Steuergerät könnte auch wenigstens eine Einrichtung aus rein hydraulischen Komponenten, wie z.B. Mengenteiler, Drosselventilen, Druckwaagen, o. ä., vorgesehen werden, um eine rein hydraulische Mengenaufteilung zwischen dem jeweiligen Schwenkzylinder 23 und Aushubzylinder 24 vorzunehmen, die dazu eingerichtet ist, den an der jeweiligen Seite des Rahmens oder Gestells 11 angeordneten Schwenkzylinder 23 und Aushubzylinder 24 zur Überführung der Erntemaschine 10 zwischen der Arbeitsstellung und der Transportstellung zumindest über einen Teil der Überführungsbewegung des mindestens einen an der jeweiligen Seite des Rahmens oder Gestells 11 angeordneten Auslegers 17 gleichzeitig anzusteuern und gleichzeitig für die jeweilige Überführungsbewegung zu nutzen.

Diese Einrichtung zur hydraulischen Mengenaufteilung könnte auch dazu eingerichtet sein, die zu beiden Seiten des Rahmens oder Gestells 11 angeordneten Schwenkzylinder 23 und Aushubzylinder 24 zur Überführung der Erntemaschine 10 zwischen der Arbeitsstellung und der Transportstellung zumindest über einen Teil der Überführungsbewegung der zu beiden Seiten des Rahmens oder Gestells 11 angeordneten Ausleger 17 gleichzeitig anzusteuern und gleichzeitig für die jeweilige Überführungsbewegung zu nutzen.

### Bezugszeichenliste

- 10: Erntemaschine
- 11: Gestell/Rahmen
- 12: Längsträger
- 13: Deichsel
- 14: Ankoppelbock
- 15: Fahrwerk
- 16: Rad
- 17: Ausleger
- 18: Arbeitseinheit
- 19: Pickup
- 20: Bandfördersegment
- 21: Abdeckung
- 22: Rollenniederhalter
- 23: Schwenkzylinder
- 24: Aushubzylinder
- 25: Klappachse
- 26: Klappachse
- 27: Aufnahme
- 28: Knickzylinder

## Patentansprüche

1. Landwirtschaftliche Erntemaschine (10),
mit einen Rahmen oder einem Gestell (11), an welchem ein Fahrwerk (15) angreift,
mit Auslegern (17), wobei zu beiden Seiten des Rahmens oder Gestells (11) jeweils mindestens ein Ausleger (17) am Rahmen oder Gestell (11) derart angreift, dass zur Überführung der Erntemaschine (10) zwischen einer Arbeitsstellung und einer Transportstellung der jeweilige Ausleger (17) relativ zum Rahmen oder Gestell (11) verlagerbar ist,
mit Arbeitseinheiten (18), wobei an jedem der Ausleger (17) jeweils mindestens eine Arbeitseinheit (18) angreift, die zusammen mit dem jeweiligen Ausleger (17) verlagerbar sind,
mit Schwenkzylindern (23) und Aushubzylindern (24), wobei zu jeder Seite des Rahmens oder Gestells (11) jeweils ein Schwenkzylinder (23) und jeweils ein Aushubzylinder (24) angeordnet sind, die den mindestens einen an der jeweiligen Seite des Rahmens oder Gestells (11) angeordneten Ausleger (17) zusammen mit der mindestens einen Arbeitseinheit (18) über eine jeweilige Überführungsbewegung zwischen der Arbeitsstellung und der Transportstellung verlagern,
mit einem Steuergerät und/oder wenigstens einer Einrichtung zur hydraulischen Mengenaufteilung, die dazu eingerichtet sind, den an der jeweiligen Seite des Rahmens oder Gestells (11) angeordneten Schwenkzylinder (23) und Aushubzylinder (24) zur Überführung der Erntemaschine (10) zwischen der Arbeitsstellung und der Transportstellung zumindest über einen Teil der Überführungsbewegung des mindestens einen an der jeweiligen Seite des Rahmens oder Gestells (11) angeordneten Auslegers (17) gleichzeitig anzusteuern und gleichzeitig für die jeweilige Überführungsbewegung zu nutzen.

2. Landwirtschaftliche Erntemaschine (10) nach Anspruch 1, **dadurch gekennzeichnet, dass** das Steuergerät und/oder die wenigstens eine Einrichtung zur hydraulischen Mengenaufteilung dazu eingerichtet sind, die zu beiden Seiten des Rahmens oder Gestells (11) angeordneten Schwenkzylinder (23) und Aushubzylinder (24) zur Überführung der Erntemaschine (10) zwischen der Arbeitsstellung und der Transportstellung zumindest über einen Teil der Überführungsbewegung der zu beiden Seiten des Rahmens oder Gestells (11) angeordneten Ausleger (17) gleichzeitig anzusteuern und gleichzeitig für die jeweilige Überführungsbewegung zu nutzen.

3. Landwirtschaftliche Erntemaschine (10) nach Anspruch 1 oder 2, **dadurch gekennzeichnet, dass**
sich die zu beiden Seiten des Rahmens oder Gestells (11) angeordneten Ausleger (17) in der Arbeitsstellung der Erntemaschine (10) in Querrichtung der Erntemaschine (10) erstrecken,
sich die zu beiden Seiten des Rahmens oder Gestells (11) angeordneten Ausleger (17) in der Transportstellung der Erntemaschine (10) in Längsrichtung der Erntemaschine (10) erstrecken,
das Steuergerät eingerichtet ist, die zu beiden Seiten des Rahmens oder Gestells (11) angeordneten Schwenkzylinder (23) und Aushubzylinder (24) zur Überführung der Erntemaschine (10) zwischen der Arbeitsstellung und der Transportstellung zumindest über denjenigen Teil der Überführungsbewegung, in welchem die Ausleger (17) zwischen der Erstreckung derselben in Querrichtung der Erntemaschine (10) und der Erstreckung derselben in Längsrichtung der Erntemaschine (10) überführt werden, gleichzeitig hydraulisch anzusteuern und gleichzeitig für die jeweilige Überführungsbewegung zu nutzen.

4. Landwirtschaftliche Erntemaschine (10) nach einem der Ansprüche 1 bis 3,
**dadurch gekennzeichnet, dass** zu beiden Seiten des Rahmens oder Gestells (11) am Rahmen oder Gestell (11) jeweils mindestens eine Aufnahme (27) angreift, die zur formschlüssigen Anordnung eines zur jeweiligen Seite des Rahmens oder Gestells (11) angeordneten Auslegers (17) in der Transportstellung der Erntemaschine (10) ausgebildet ist.

5. Landwirtschaftliche Erntemaschine (10) nach Anspruch 4, **dadurch gekennzeichnet, dass** das Steuergerät eingerichtet ist, dass dann, wenn sich die zu beiden Seiten des Rahmens oder Gestells (11) angeordneten Ausleger (17) in Längsrichtung der Erntemaschine erstrecken, ausschließlich den jeweiligen Schwenkzylinder (23) hydraulisch anzusteuern und für den entsprechenden Teil der jeweiligen Überführungsbewegung zu nutzen, um bei der Überführung der Erntemaschine (10) von Arbeitsstellung in die Transportstellung den jeweiligen Ausleger (17) in die jeweilige Aufnahme (27) hinein zu bewegen und bei der Überführung der Erntemaschine (10) von der Transportstellung in die Arbeitsstellung den jeweiligen Ausleger (17) aus der jeweilige Aufnahmen (27) heraus zu bewegen.

6. Landwirtschaftliche Erntemaschine (10) nach einem der Ansprüche 1 bis 5,
**dadurch gekennzeichnet, dass** der jeweilige Schwenkzylinder (23) einerseits am Rahmen oder Gestell (11) und anderseits am jeweiligen Ausleger (17) gelenkig angreift, wobei sich in der Arbeitsstellung der Erntemaschine (10) eine Klappachse (25) zwischen dem jeweiligen Schwenkzylinder (23) und dem jeweiligen Ausleger (17) in vertikaler Richtung erstreckt.

7. Landwirtschaftliche Erntemaschine (10) nach einem der Ansprüche 1 bis 6,
**dadurch gekennzeichnet, dass** der jeweilige Aushubzylinder (24) einerseits am Rahmen oder Gestell (11) und anderseits am jeweiligen Ausleger (17) gelenkig angreift, wobei sich in der Arbeitsstellung der Erntemaschine (10) eine Klappachse (26) zwischen dem jeweiligen Aushubzylinder (24) und dem jeweiligen Ausleger (17) in horizontaler Richtung erstreckt.

8. Landwirtschaftliche Erntemaschine (10) nach einem der Ansprüche 1 bis 7,
**dadurch gekennzeichnet, dass** der Rahmen oder das Gestell (11) einen ersten Abschnitt (11b), an welchem das Fahrwerk (15) angreift, und einen zweiten Abschnitt (11a), an welchem eine Deichsel (13) angreift, aufweist, wobei diese beiden Abschnitte (11a, 11b) mit Hilfe eines Knickzylinders (28) um eine sich in Querrichtung der Erntemaschine erstreckende Achse relativ zueinander verlagerbar sind, um den Abstand der Arbeitseinheiten (18) von einem Untergrund zu verändern.

9. Landwirtschaftliche Erntemaschine (10) nach Anspruch 8, **dadurch gekennzeichnet, dass** das Steuergerät eingerichtet ist, den Knickzylinder (28) zumindest über einen Teil der Überführungsbewegung des jeweiligen Auslegers gleichzeitig mit dem Schwenkzylinder (23) und Aushubzylinder (24) hydraulisch anzusteuern und gleichzeitig für die jeweilige Überführungsbewegung zu nutzen.

10. Landwirtschaftliche Erntemaschine (10) nach einem der Ansprüche 1 bis 9,
**dadurch gekennzeichnet, dass** dieselbe eine Futtererntemaschine ist.

11. Landwirtschaftliche Erntemaschine (10) nach Anspruch 10, **dadurch gekennzeichnet, dass** die Futtererntemaschine ein Merger oder Pickup-Band-Schwader ist, wobei an jedem der Ausleger (17) als Arbeitseinheit (18) eine Pickup (19) und ein Bandfördersegment (20) angreift.

12. Verfahren zum Betreiben einer landwirtschaftliche Erntemaschine (10) nach einem der Ansprüche 1 bis 11, wobei der an der jeweiligen Seite des Rahmens oder Gestells (11) angeordnete Schwenkzylinder (23) und Aushubzylinder (24) zur Überführung der Erntemaschine (10) zwischen der Arbeitsstellung und der Transportstellung zumindest über einen Teil der Überführungsbewegung des mindestens einen an der jeweiligen Seite des Rahmens oder Gestells (11) angeordneten Auslegers (17) gleichzeitig hydraulisch angesteuert und gleichzeitig für die jeweilige Überführungsbewegung genutzt werden.

13. Verfahren nach Anspruch 12, **dadurch gekennzeichnet, dass** bei der Überführung der Erntemaschine (10) von der Arbeitsstellung in die Transportstellung zunächst die an beiden Seiten des Rahmens oder Gestells (11) angeordneten Schwenkzylinder (23) und Aushubzylinder (24) gleichzeitig hydraulisch angesteuert und für die jeweilige Überführungsbewegung genutzt werden, bis sich die zu beiden Seiten des Rahmens oder Gestells (11) angeordneten Ausleger (17) in Längsrichtung der Erntemaschine (10) erstrecken, wobei nachfolgend ausschließlich die Schwenkzylinder (23) für die jeweilige Überführungsbewegung genutzt wird, um die Ausleger (17) in die zu beiden Seiten des Rahmens oder Gestells (11) angeordneten Aufnahmen (27) hinein zu bewegen.

14. Verfahren nach Anspruch 12 oder 13, **dadurch gekennzeichnet, dass** die bei der Überführung der Erntemaschine (10) von der Transportstellung in die Arbeitsstellung zunächst ausschließlich die Schwenkzylinder (23) für die jeweilige Überführungsbewegung genutzt werden, um die Ausleger (17) aus die zu beiden Seiten des Rahmens oder Gestells (11) angeordneten Aufnahmen (27) heraus zu bewegen, wobei nachfolgend die an beiden Seiten des Rahmens oder Gestells (11) angeordneten Schwenkzylinder (23) und Aushubzylinder (24) gleichzeitig hydraulisch angesteuert und für die jeweilige Überführungsbewegung genutzt werden, bis sich die zu beiden Seiten des Rahmens oder Gestells (11) angeordneten Ausleger in Querrichtung der Erntemaschine (10) erstrecken.
